# EUROPÄISCHE PATENTSCHRIFT

(11) **EP 1 391 584 B1**
(45) Veröffentlichungstag und Bekanntmachung des Hinweises auf die Patenterteilung: **28.04.2010**
(21) Anmeldenummer: 03018579.7
(22) Anmeldetag: 18.08.2003
(51) Int. Cl.: F02C 6/12, F01D 17/16

(54) **Turbolader mit variabler Turbinengeometrie**
Turbocharger with variable geometry
Turbocompresseur à géométrie variable

(30) Priorität: 22.08.2002 DE 10238413
(43) Veröffentlichungstag der Anmeldung: 25.02.2004
(73) Patentinhaber: Volkswagen AG, 38436 Wolfsburg (DE)
(72) Erfinder: Baar, Roland, Dr., 38518 Gifhorn (DE)
(74) Vertreter: Kandlbinder, Markus Christian

(56) Entgegenhaltungen:
- DE-A1- 19 717 855
- US-A- 1 951 640
- US-A- 4 741 666
- PATENT ABSTRACTS OF JAPAN Bd. 2000, Nr. 05, 14. September 2000 (2000-09-14) & JP 2000 064846 A (AKITA FINE BLANKING:KK), 29. Februar 2000 (2000-02-29)

## Beschreibung

Die Erfindung betrifft einen Turbolader mit variabler Turbinengeometrie einer Brennkraftmaschine, insbesondere eines Kraftfahrzeuges, gemäß dem Oberbegriff des Anspruchs 1.

Aus der DE 100 13 335 A1 ist ein Turbolader bekannt, bei dem der Stellring an seiner Außenfläche auf Wälzkörpern gelagert ist. Diese Wälzkörper sind als an einem Tragring schwenkbar gelagerte, einarmige Hebel ausgebildet. Bei einer über eine Fremdsteuerung eingeleiteten Drehung des Stellringes wälzen sich die in Nuten geführten Abschnitte der Außenfläche des Stellringes bei gleichzeitigem Schwenken der einarmigen Hebel auf einem Nutgrund ab. Dies soll eine Selbsthemmung des Stellringes während einer Drehbewegung vermeiden.

Aus der EP 0 160 460 A2 ist ein Turbolader mit verstellbarer Turbinengeometrie bekannt, bei dem der Verstellring mittels Rollen gelagert ist. Die Rollen sind an einer der Stirnflächen des Verstellringes angeordnet und überragen einen Außenumfang des Verstellringes in radialer Richtung. Der Stellring ist in einer ringförmigen Ausnehmung drehbar angeordnet, wobei die Rollen in eine Erweiterung der Ausnehmung in axialer Richtung greifen.

Aus der US-4 741 666 ist ein Turbolader mit variabler Turbinengeometrie bekannt, wobei der Verstellring zwischen dem Turbinengehäuse und dem Gasauslassdeckel in einer Nut geführt ist.

Die zuvor beschriebenen Lagerungen für den Stellring sind jedoch mechanisch aufwendig, kostenintensiv, haben einen hohen Bauraumbedarf und sind mit einer hohen Anzahl von Einzelteilen verbunden.

Der Erfindung liegt die Aufgabe zugrunde, einen Turbolader der obengenannten Art bzgl. seines mechanischen Aufbaus zu verbessern.

Diese Aufgabe wird erfindungsgemäß durch einen Turbolader der o.g. Art mit den in Anspruch 1 gekennzeichneten Merkmalen gelöst. Vorteilhafte Ausgestaltungen der Erfindung sind in den abhängigen Ansprüchen angegeben.

Dazu ist es erfindungsgemäß vorgesehen, dass die dritte Ebene der ersten Verstellhebel (16) zwischen der zweiten Ebene des Verstellrings (22) und der vierten Ebene der zweiten Verstellhebel (26) angeordnet ist.

Dies hat den Vorteil, dass der Verstellring nicht gesondert gelagert werden muss, sondern über die Hebelkombination eindeutig zwischen zwei Ebenen, nämlich der ersten Ebene des Leitschaufelträgers und dritten Ebene der ersten Verstellhebel, sowohl axial als auch radial geführt ist.

In einer bevorzugten Ausführungsform sind die zweiten Verstellhebel an einem Vorsprung des Verstellringes mit diesem schwenkbar und an einem vom Verstellring abgewandten Ende jeweils mit einem der ersten Verstellhebel schwenkbar verbunden.

Zweckmäßigerweise sind die ersten Verstellhebel jeweils an einem von den zweiten Verstellhebeln abgewandten Ende drehfest mit einer Leitschaufel verbunden.

Weitere Merkmale, Vorteile und vorteilhafte Ausgestaltungen der Erfindung ergeben sich aus den abhängigen Ansprüchen, sowie aus der nachstehenden Beschreibung der Erfindung anhand der beigefügten Zeichnungen. Diese zeigen in
Fig. 1 eine bevorzugte Ausführungsform einer erfindungsgemäß ausgebildeten Turbine mit Leitschaufeln eines Abgasturboladers bei offener Stellung der Leitschaufeln in Schnittansicht und
Fig. 2 die bevorzugte Ausführungsform einer erfindungsgemäß ausgebildeten Turbine mit Leitschaufeln eines Abgasturboladers gemäß Fig. 1 bei geschlossener Stellung der Leitschaufeln in Schnittansicht.

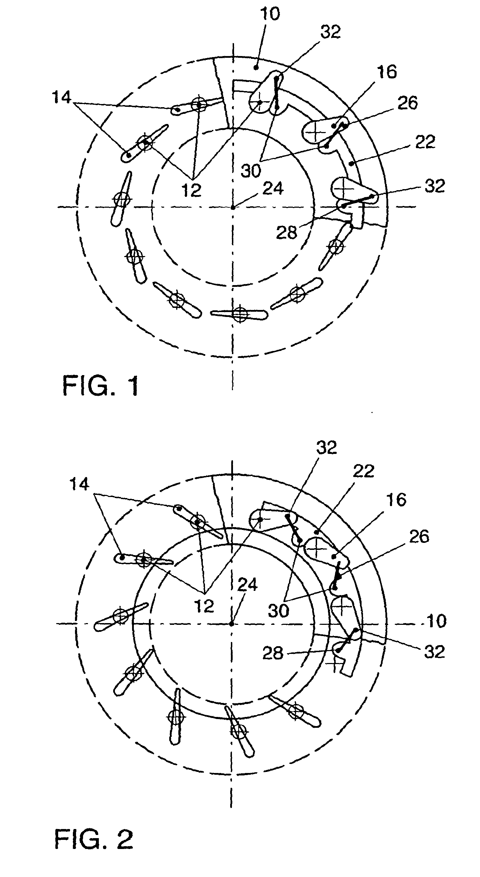

Fig. 1 und 2 zeigen schematisch eine bevorzugte Ausführungsform eines Turbinenteils eines ansonsten nicht näher dargestellten Abgasturboladers einer Brennkraftmaschine. An einem Leitschaufelträger 10 sind um eine Achse 12 schwenkbar gelagerte und in einer ersten Ebene axial beabstandet von dem Leitschaufelträger 10 angeordnete Leitschaufeln 14 vorgesehen. Die Schwenkachsen 12 der Leitschaufeln 14 sind fest auf dem Leitschaufelträger 10 angeordnet. Jeder Leitschaufel 14 ist ein erster Verstellhebel 16 zugeordnet, welcher drehfest mit der jeweiligen Leitschaufel 14 verbunden ist, wobei alle ersten Verstellhebel 16 in einer axial von der ersten Ebene des Leitschaufelträgers 10 beabstandeten zweiten Ebene angeordnet sind und in radialer Richtung über den Verstellring 22 ragen. Mit "radial" ist hier und nachfolgend eine Richtung bzgl. einer Drehachse 24 der Turbine gemeint. Hierdurch ergibt sich eine gewisse Überdeckung zwischen den ersten Verstellhebeln 16 und dem Verstellring 22. Dadurch ist der Verstellring 22 zwischen den ersten Verstellhebeln 16 und dem Leitschaufelträger 10 axial geführt.

Der Verstellring 22 ist mit den ersten Verstellhebeln 16 über jeweilige zweite Verstellhebel 26 verbunden, wobei jeder erste Verstellhebel 16 über einen jeweiligen zweiten Verstellhebel 26 mit dem Verstellring 22 verbunden ist. Die zweiten Verstellhebel 26 sind dabei mit ihren von den ersten Verstellhebeln 16 abgewandten Enden jeweils an einem Vorsprung 28 des Verstellringes 22 mit diesem um eine Achse 30 schwenkbar verbunden. Die zweiten Verstellhebel 26 sind des Weiteren mit ihren vom Verstellring 22 abgewandten Enden jeweils mit einem ersten Verstellring 16 um eine Achse 32 schwenkbar verbunden. Durch diese Doppelhebelanordnung ergibt sich eine radiale Führung des Verstellringes 22. Somit sind keine zusätzlichen Elemente bzw. Lager für eine axiale und radiale Führung notwendig, so dass insgesamt weniger Bauteil notwendig sind und sich turbinenseitig ein verbesserter mechanischer Aufbau des Abgasturboladers

Der Verstellring 22 ist bezüglich des Leitschaufelträgers 10 schwenkbar angeordnet, wobei eine Verschwenkung des Verstellringes 22 bezüglich des Leitschaufelträgers 10 zu einem Verschwenken der ersten und zweiten Verstellhebel 16, 26 um die jeweiligen Achsen 12, 30 und 32 bedingt. Mit den Verstellhebeln 16 und 26 verschwenken auch die jeweiligen Leitschaufeln 14 um die Achsen 12. Je nach Stellung der Leitschaufeln 14 bzgl. der Strömungsrichtung wird ein Druck bzw. eine Verdichterleistung geregelt. Fig. 1 zeigt dabei eine "offene" Position der Leitschaufeln 14 und Fig. 2 zeigt eine "geschlossene" Position der Leitschaufeln 14, welche dadurch erzielt wird, dass ausgehend von der Stellung gemäß Fig. 1 der Verstellring 22 bzgl. des Leitschaufelträgers 10 gemäß der Ansicht von Fig. 1 im Uhrzeigersinn verschwenkt wird. Hierdurch verschwenken die zweiten Verstellhebel 26 um die Achse 30 entgegen dem Uhrzeigersinn und die ersten Verstellhebel um die Achsen 12 und 32 im Uhrzeigersinn. Die führt dementsprechend zu einem Verschwenken der Leitschaufeln 14 um die jeweiligen Achsen 12 im Uhrzeigersinn in die in Fig. 2 dargestellte Position.

Durch die zuvor beschriebene Verstellung der Position der Leitschaufeln 14 an einem Turbineneintritt mittels Verschwenken des Verstellringes 22 erfolgt eine Regelung von Luftmassendurchsatz und Ladedruck auf einer nicht dargestellten Verdichterseite des Abgasturboladers bei verschiedenen Betriebspunkten einer Brennkraftmaschine. Das Verschwenken des Verstellringes 22 erfolgt mit einer externen, nicht dargestellten Stelleinrichtung.

Die zweiten Verstellhebel 26 sind in der beispielhaft dargestellten Ausführungsform in einer vierten Ebene angeordnet, welche axial von der dritten Ebene der ersten Verstellhebel 16 und der zweiten Ebene des Verstellrings 22 derart angeordnet sind, dass die dritte Ebene der ersten Verstellhebel 16 zwischen der zweiten Ebene des Verstellrings 22 und der vierten Ebene der zweiten Verstellhebel 26 angeordnet ist. Die Leitschaufeln 14 und der Verstellring 22 sind in der dargestellten Ausführungsform an gegenüberliegenden Seiten des Leitschaufelträgers 10 angeordnet.

## Patentansprüche

1. Turbolader mit variabler Turbinengeometrie einer Brennkraftmaschine, insbesondere eines Kraftfahrzeuges, mit an einem Leitschaufelträger (10) in einer ersten Ebene schwenkbar angeordneten Leitschaufeln (14) einer Turbine, denen jeweils ein erster Verstellhebel (16) zugeordnet ist, und mit einem Verstellring (22), welcher in einer axial von der ersten Ebene des Leitschaufelträgers (10) beabstandeten zweiten Ebene angeordnet ist und durch Drehung relativ zum Leitschaufelträger (10) eine Winkelstellung der Leitschaufeln (14) relativ zu einer Strömungsrichtung kollektiv für alle Leitschaufeln (14) verstellt, wobei der Verstellring (22) über jeweils einen zweiten Verstellhebel (26) mit den ersten Verstellhebeln (16) verbunden ist, wobei die ersten Verstellhebel (16) axial von der ersten Ebene des Leitschaufelträgers (10) und der zweiten Ebene des Verstellringes (22) beabstandet in einer dritten Ebene derart angeordnet und ausgebildet sind sowie in radialer Richtung den Verstellring (22) überdecken, dass die ersten Verstellhebel (16) den Verstellring (22) zwischen sich und dem Leitschaufelträger (10) führen, wobei die zweiten Verstellhebel (26) axial beabstandet von der dritten Ebene der ersten Verstellhebel (16) in einer vierten Ebene angeordnet sind, **dadurch gekennzeichnet, dass** die dritte Ebene der ersten Verstellhebel (16) zwischen der zweiten Ebene des Verstellrings (22) und der vierten Ebene der zweiten Verstellhebel (26) angeordnet ist.

2. Turbolader nach Anspruch 1, **dadurch gekennzeichnet, dass** die zweiten Verstellhebel (26) an einem Vorsprung des Verstellringes(22) mit diesem schwenkbar verbunden sind.

3. Turbolader nach Anspruch 1 oder 2, **dadurch gekennzeichnet, dass** die zweiten Verstellhebel (26) an einem vom Verstellring (22) abgewandten Ende jeweils mit einem der ersten Verstellhebel (16) schwenkbar verbunden sind.

4. Turbolader nach wenigstens einem der vorhergehenden Ansprüche, **dadurch gekennzeichnet, dass** die ersten Verstellhebel (16) jeweils an einem von den zweiten Verstellhebeln (26) abgewandten Ende drehfest mit einer Leitschaufel (14) verbunden sind.

## Claims

1. Turbocharger with variable turbine geometry of an internal combustion engine, in particular of a motor vehicle, having guide blades (14), arranged pivotably in a first plane on a guide blade carrier (10), of a turbine, which guide blades (14) are assigned in each case one adjusting lever (16), and having an adjusting ring (22) which is arranged in a second plane spaced apart axially from the first plane of the guide blade carrier (10) and which, by rotating relative to the guide blade carrier (10), adjusts an angular position of the guide blades (14) relative to a flow direction collectively for all the guide blades (14), with the adjusting ring (22) being connected by means of in each case one second adjusting lever (26) to the first adjusting levers (16), with the first adjusting levers (16) being arranged in a third plane spaced apart axially from the first plane of the guide blade carrier (10) and from the second plane of the adjusting ring (22), and being designed and overlapping the adjusting ring (22) in the radial direction, in such a way that the first adjusting levers (16) guide the adjusting ring (22) between themselves and the guide blade carrier (10), with the second adjusting levers (26) being arranged in a fourth plane axially spaced apart from the third plane of the first adjusting levers (16), **characterized in that** the third plane of the first adjusting levers (16) is arranged between the second plane of the adjusting ring (22) and the fourth plane of the second adjusting levers (26).

2. Turbocharger according to Claim 1, **characterized in that** the second adjusting levers (26) are pivotably connected to the adjusting ring (22) via a projection of the latter.

3. Turbocharger according to Claim 1 or 2,
**characterized in that** the second adjusting levers (26) are pivotably connected, at an end facing away from the adjusting ring (22), in each case to one of the first adjusting levers (16).

4. Turbocharger according to at least one of the preceding claims, **characterized in that** the first adjusting levers (16) are in each case rotationally fixedly connected, at an end facing away from the second adjusting levers (26), to a guide blade (14).

## Revendications

1. Turbocompresseur à géométrie de turbine variable pour un moteur à combustion interne, en particulier d'un véhicule automobile, comprenant, sur un support d'aubes directrices (10) des aubes directrices (14) d'une turbine disposées de manière pivotante dans un premier plan, auxquelles on associe à chaque fois un premier levier de réglage (16), et comprenant une bague de réglage (22) qui est disposée dans un deuxième plan espacé axialement du premier plan du support d'aubes directrices (10) et qui, par rotation par rapport au support d'aubes directrices (10), règle une position angulaire des aubes directrices (14) par rapport à un sens d'écoulement de manière collective pour toutes les aubes directrices (14), la bague de réglage (22) étant connectée par le biais d'un deuxième levier de réglage respectif (26) aux premiers leviers de réglage (16), les premiers leviers de réglage (16) étant disposés et réalisés dans un troisième plan à distance axiale du premier plan du support d'aubes directrices (10) et du deuxième plan de la bague de réglage (22), et recouvrant la bague de réglage (22) dans la direction radiale de telle sorte que les premiers leviers de réglage (16) guident la bague de réglage (22) entre eux et le support d'aubes directrices (10), les deuxièmes leviers de réglage (26) étant disposés à distance axiale du troisième plan des premiers leviers de réglage (16) dans un quatrième plan, **caractérisé en ce que** le troisième plan des premiers leviers de réglage (16) est disposé entre le deuxième plan de la bague de réglage (22) et le quatrième plan des deuxièmes leviers de réglage (26).

2. Turbocompresseur selon la revendication 1,
**caractérisé en ce que** les deuxièmes leviers de réglage (26) sont connectés sur une saillie de la bague de réglage (22) de manière à pouvoir pivoter avec celle-ci.

3. Turbocompresseur selon la revendication 1 ou 2, **caractérisé en ce que** les deuxièmes leviers de réglage (26) sont connectés à chaque fois à une extrémité opposée à la bague de réglage (22) de manière à pouvoir pivoter avec l'un des premiers leviers de réglage (16).

4. Turbocompresseur selon au moins l'une quelconque des revendications précédentes, **caractérisé en ce que** les premiers leviers de réglage (16) sont connectés à chaque fois à une extrémité opposée aux deuxièmes leviers de réglage (26) de manière solidaire en rotation à une aube directrice (14).
